# EUROPÄISCHE PATENTSCHRIFT

(11) **EP 2 128 432 B1**
(45) Veröffentlichungstag und Bekanntmachung des Hinweises auf die Patenterteilung: **18.04.2012**
(21) Anmeldenummer: 09007143.2
(22) Anmeldetag: 28.05.2009
(51) Int. Cl.: F03D 1/06, F03D 1/04

(54) **Windkraftanlage mit axialem Lufteintritt und radialem Luftaustritt**
Wind turbine assembly with axial air intake and radial air outlet
Eolienne avec une entrée d'air axiale et une sortie d'air radiale

(30) Priorität: 29.05.2008 DE 102008025719
(43) Veröffentlichungstag der Anmeldung: 02.12.2009
(73) Patentinhaber: Fichtner, Klaus, 76297 Stutensee (DE)
(72) Erfinder: Fichtner, Klaus, 76297 Stutensee (DE)
(74) Vertreter: Geitz Truckenmüller Lucht

(56) Entgegenhaltungen:
- EP-A1- 0 347 291
- WO-A1-2006/050711
- DE-A1- 2 951 085
- DE-A1- 4 414 208
- US-A- 1 433 995

## Beschreibung

Die vorliegende Erfindung betrifft eine Windkraftanlage mit einer um eine Drehachse rotierbare Antriebsscheibe, welcher zuluftseitig um die Drehachse herum wirbelförmig angeordnete Lamellen derart zugeordnet sind, dass ein axial einströmender Luftstrom von den Lamellen unter Vortrieb der Antriebsscheibe radial abgeleitet wird.

Eine derartige Windkraftanlage ist bereits aus der US 1433995 vorbekannt. Die in dieser amerikanischen Schrift beschriebene Windkraftanlage beruht auf einem Antriebspropeller, welcher als Antriebscheibe mit im Bezug auf den Radius schräg gestellten, schaufelförmigen Lamellen ausgeführt ist. Diese Antriebsscheibe sitzt auf einer Antriebswelle, die im Bereich einer Aufhängung eine Schlaufe aufweist, dergestalt, dass die Schlaufe durch eine Drehung der Antriebsscheibe im Sinne einer Kurbelwelle eine Stange in Hubbewegungen versetzt. Mithilfe dieser in Hubbewegungen versetzten Stange kann erfindungsgemäß beispielsweise eine Pumpe betrieben werden, so dass hierdurch eine autonome, selbsttätige Pumptätigkeit mithilfe der Erfindung erzielt werden kann.

Nachdem in den früheren Zeiten dieser Anmeldung, nämlich den zwanziger Jahren des letzten Jahrhunderts, eine unabhängige Energieversorgung deshalb erforderlich war, weil eine zentrale Versorgung mit Energie noch nicht flächendeckend gewährleistet war, besteht in der heutigen Zeit trotz einer mittlerweile flächendeckenden Versorgung mit elektrischer Energie weiterhin Bedarf nach dem Einsatz regenerativer Energien, sei es um Strom zu sparen oder um einen Inselbetrieb zur Versorgung mit elektrischer Energie zu gewährleisten. Letzteres ist insbesondere dort sinnvoll, wo auf Grund der benötigten Menge an elektrischer Energie das Verlegen einer Leitung nicht angezeigt erscheint.

Die Nutzung der Windenergie erfolgt heutzutage hauptsächlich durch größere, industrielle Windkraftanlagen, jedoch ist es durchaus auch im Interesse privater Haushalte, die ohnehin vorhandene Energie des Windes für sich nutzbar zu machen. Analog zu häufig auf privaten Hausdächern aufzufindenden privaten Solarkollektoren wird bereits seit Längerem darüber nachgedacht, wie auch im privaten Umfeld die Windkraft nutzbar gemacht werden kann. Insoweit offenbart beispielsweise die DE 19615087 A1 eine turbinenartige Windkraftmaschine, die DE 19506946 C1 sieht sogar vor, windstauende bzw. windleitende Wirkungen von Gebäudefronten dadurch zu nutzen, dass in die Dachstühle von Gebäuden Windkanäle eingesetzt werden, in denen Turbinen von der Luftströmung zur Erzeugung von elektrischer Energie angetrieben werden.

Eine weitere Möglichkeit, an den Hauswänden auftretende Konvektionsströmungen zu nutzen, ist in der deutschen Offenlegungsschrift DE 2951085 A1 beschrieben.

Häufig ist es jedoch für den privaten Nutzer kaum durchzuführen, dass ein Generator an einer Windkraftanlage freistehend auf einem Grundstück aufgestellt wird, so dass er vom Wind in ausreichender Weise umströmt werden kann. Ebenfalls ist es selten möglich, den gesamten Dachstuhl eines Hauses zur Generierung von Elektrizität durch Einbau eines Windkanals bereitzuhalten, wobei selbst dies lediglich dann möglich ist, wenn das Gebäude bereits ohnehin in Windrichtung ausgerichtet ist.

Vor diesem Hintergrund liegt der vorliegenden Erfindung die Aufgabe zu Grunde, eine Windkraftanlage zu schaffen, welche für den privaten Nutzer raumsparend aufgestellt werden kann und welche überdies an die Bedürfnisse des Benutzers angepasst werden kann.

Dies gelingt durch eine Windkraftanlage gemäß den Merkmalen des Anspruchs 1. Weitere sinnvolle Ausgestaltungen der erfindungsgemäßen Windkraftanlage können den Unteransprüchen entnommen werden.

Erfindungsgemäß besteht eine Windkraftanlage im Wesentlichen aus einer Antriebsscheibe, auf welcher Lamellen angeordnet sind. Diese Lamellen sind wirbelförmig um eine Drehachse der üblicherweise rund ausgeführten Antriebsscheibe angeordnet, so dass der axial, also praktisch frontal auf die Antriebsscheibe auftreffende, Luftstrom von der Mitte der Antriebsscheibe nach außen, also radial, abgeleitet wird. Durch die wirbelförmige Anordnung der Lamellen auf der Antriebsscheibe treibt der radial abgelenkte Luftstrom die Antriebsscheibe in Drehrichtung an. Dies ist deshalb möglich, weil die Antriebsscheibe in einem Gehäuse aufgenommen ist, gegenüber welchem sie rotierbar gelagert ist. Das Gehäuse weist einen axialen Einlass sowie einen radialen Auslass auf, durch welchen der auf die Windkraftanlage auftreffende Wind hindurchtreten kann. Dem Gehäuse ist auf der rückwärtigen Seite, also auf der dem Einlass gegenüberliegenden Seite, eine Konsole zugeordnet, mit deren Hilfe die erfindungsgemäße Windkraftanlage an einer Fläche, insbesondere einer Wand, aufgehängt werden kann. Die Drehung der Antriebsscheibe kann sodann mithilfe geeigneter Übertragungsmittel an einen Generator weitergeleitet und von diesem in elektrische Energie umgewandelt werden. Auf Grund dieser konstruktiven Ausgestaltung der Windkraftanlage ist es somit ermöglicht, dass diese an einer Wand befestigt wird, mithin also von jeder Privatperson durchaus ohne größere Aufwendungen an Platz aufgestellt wird. Es handelt sich somit hierbei um eine Lösung, die die Nutzung der Windenergie selbst im kleinen Bereich möglich macht.

Um eine möglichst hohe Effizienz der erfindungsgemäßen Windkraftanlage zu erreichen, ist es möglich, die Elemente der Windkraftanlage konstruktiv durch verschiedene Abwandlungen in ihrer Effizienz zu erhöhen. So ist es zunächst möglich, dass die Lamellen senkrecht von der Antriebsscheibe aufragen, so dass beispielsweise schräg auf die Antriebsscheibe treffender Wind ideal von ihnen aufgefangen werden kann. In einer alternativen Ausgestaltung ist es jedoch auch möglich, die Lamellen derart schräg gegenüber der Antriebsscheibe anzustellen, dass die Lamellen mit der Antriebsscheibe einen spitzen Winkel einschließen, diese also gegen die Fläche der Antriebsscheibe abgekippt werden. Weiterhin ist es sinnvoll, die Lamellen zumindest abschnittsweise nach außen hin ansteigend anzuformen, so dass der auf die Antriebsscheibe treffende Luftstrom sanfter in die durch die Lamellen gebildeten Kanäle gelenkt wird. Die Lamellen zeigen hierbei die Druckverteilung eines Tragflügels. Dies dient dazu, die im Rahmen des Betriebs der Windkraftanlage entstehenden Geräusche, welche durch die Brechung des Windes an den Lamellenkanten entstehen, zu minimieren. Dies ist insoweit sinnvoll, da wie bereits ausgeführt die erfindungsgemäßen Windkraftanlagen im Bereich privater Haushalte eingesetzt werden können. Insoweit ist es auch sinnvoll, wenn die Lamellen im Randbereich der Antriebsscheibe zwar stumpf enden, jedoch an ihren Abrisskanten Einkerbungen aufweisen. Diese Einkerbungen dienen ebenfalls dazu, dass der in die Windkraftanlage eingreifende Luftstrom im Bereich der radial außen liegenden Kanten der Lamellen nicht einfach abreißt und hierdurch laute Geräusche verursacht, sondern dass vielmehr die entstehenden Geräusche gedämpft werden.

Zur Verbesserung der Effizienz, insbesondere um den Wind im Bereich der Lamellen besser aufzufangen und zu kanalisieren, können den Lamellen insbesondere im Bereich der Drehachse Abkantungen zugeordnet sein, welche in der Art von umgebogenen Lüfterflügeln den bereits in den Bereich der Lamellen eingeströmten Luftstrom besser einfangen.

Eine weitere Verbesserung der Effizienz der Windkraftanlage erfolgt dadurch, dass dieser im Bereich des Einlasses eine trichterförmige Einfassung zugeordnet ist, so dass der auf den Einlass zuströmende Luftstrom durch die schräg angestellte Trichterwand bereits schräg auf die Lamellen auftrifft, somit also bereits einen radialen Bewegungsanteil aufweist.

Eine derartige, trichterförmige Einfassung dient zudem dazu, die Geräuschentwicklung an den Außenkanten der Lamellen zu dämpfen, da sie als Geräuschschirm funktioniert.

Konkret kann diese Einfassung über eine Trennkante in eine Innenflanke und eine Außenflanke unterteilt sein, welche in einem Winkel zueinander derart angeordnet sind, dass die auf die Innenflanke einströmende Luft auf die Antriebsscheibe geleitet und die auf die Außenflanke treffende Luft seitlich von der Anordnung abgeleitet wird. Der Teil des Luftstroms, welcher auf die Außenflanke trifft, erzeugt hierbei eine Strömung, welche die Abluft von der Antriebsscheibe in ihrer radialen Strömung unterstützt. Ein optimal ausgeprägter Rand der Außenflanke wird den radialen Auslass dadurch positiv beeinflussen, dass hinter dem Trichterrand ein Unterdruck entsteht, welcher den radialen Auslass von der Antriebsscheibe fördert. Ein Staudruck im Bereich des radialen Auslasses wird dadurch verhindert, so dass diese Maßnahme zur Steigerung des Wirkungsgrades der Windkraftanlage beiträgt.

Um die Kraft von der Windkraftanlage auch nutzbar machen zu können, ist es erforderlich, diese in irgendeiner Form umzulenken und an einen Abnehmer weiterzuleiten. Hierfür kommt insbesondere ein Generator in Frage, der durch Übertragung von Drehenergie auf eine Antriebsachse im Ergebnis elektrische Energie erzeugen kann. Hierzu weist mit Vorteil die Antriebsscheibe eine Rändelung beziehungsweise ein Zahnsegment auf, in welches ein Zahnrad beziehungsweise ein hierfür geeigneter Zahnriemen oder anderweitiger Riemen eingreifen kann. Insbesondere ist es möglich, der Antriebsscheibe ein zusätzliches Element, etwa eine zusätzliche Rändelscheibe zuzuordnen, mit deren Hilfe die Kraftübertragung von der Windkraftanlage auf den Generator erfolgen kann. Hierbei ist es auch möglich, dass der Einsatz verschiedener Elemente vorgesehen wird, so dass der Benutzer die Form der Kraftübertragung auf einen Generator oder auf ein beliebiges anderes Energieaufnahmemittel wählen kann. Der Generator bzw. das jeweilige andere Energieaufnahmemittel wird dann direkt oder durch Umlenkung mit der Rändelung bzw. dem Zahnsegment verbunden.

Nachdem eine Antriebsscheibe selbstverständlich möglichst leicht hergestellt wird, so dass sie auch von geringen Windstößen bereits angetrieben werden kann, kann es hierdurch bei stärkeren Windbelastungen dazu kommen, dass die Antriebsscheibe auf Grund der wechselnden Windgeschwindigkeiten ihrerseits ebenfalls mit wechselnden Geschwindigkeiten rotiert und somit eine ungleichmäßige Energieausbeute erzielt. Um die Antriebsscheibe auf größere Windgeschwindigkeiten einzustellen, kann ihr daher eine Massescheibe zugeordnet werden, welche das Gewicht bzw. die Masse der Antriebsscheibe gegenüber dem normalen Wert erhöht. Diese Massescheibe, welche die Aufgabe hat, die Windenergie in Form von Rotationsenergie, also kinetischer Energie, zwischenzuspeichern, kann nach Bedarf auch lösbar mit der Antriebsscheibe verbunden sein, so dass bei zu erwartenden stärkeren Windbelastungen der Benutzer auch die Massescheibe bedarfsweise hinzufügen oder im umgekehrten Fall auch entfernen kann. Um diesen zusätzlichen Arbeitsschritt für den Nutzer zu ersparen, kann mit besonderem Vorteil die Massescheibe auch über eine Fliehkraftkupplung mit der Antriebsscheibe verbunden sein, so dass diese die Massescheibe erst dann in die Drehung der Antriebsscheibe mit einstimmen lässt, wenn diese eine gewisse Drehgeschwindigkeit erreicht hat, oder durch den erhöhten Winddruck zusammengefügt wird. Hierdurch ist eine gleichmäßigere Effizienz bzw. eine größere Laufruhe der Antriebsscheibe ermöglicht.

Insbesondere bei größeren Radien der Antriebsscheibe kann diese modular aufgebaut sein, indem die Antriebsscheibe in Kreissegmente zerfällt. Diese werden auf eine Grundscheibe montiert, so dass eine deutliche Vereinfachung in Bezug auf die Herstellung, den Transport und die Lagerung zu verzeichnen ist, nachdem hierdurch kleinere Werkzeugmaschinen und Transporteinheiten anfallen. Zudem ist die Herstellung dann deutlich vereinfacht, wenn es sich hierbei um identische Kreissegmente handelt.

Als Grundscheibe eignet sich insbesondere bei großen Radien ein Speichenrad, welche eine große Stabilität bei verhältnismäßig kleinem Gewicht bedeutet. Der äußere Ring kann hierbei jedoch ein relativ hohes Gewicht aufweisen, so dass die Antriebsscheibe und damit die ganze Windkraftanlage eine hohe Laufruhe erzielt. Bedarfsweise ist es ergänzend möglich, das Speichenrad bzw. die Antriebsscheibe durch Auswuchtgewichte in geeigneter Weise abzustimmen.

Die Konsole, auf welcher das Gehäuse aufgesetzt ist, kann mit Vorteil entweder zur Wandbefestigung vorgesehen sein, indem insbesondere ein Gestell unter der Konsole vorgesehen ist, welches an die Wand angeschraubt werden kann. In Weiterbildung dieses Gedankens kann jedoch auch der Konsole im Bereich der Wandbefestigungsmittel ein Scharnier zugeordnet sein, so dass die Konsole nicht etwa fest in einer Position an der Wand befestigt werden muss, sondern vielmehr bei Bedarf auch in den Wind hineingedreht werden kann, um gegebenenfalls eine bessere Ausbeute zu erzielen. In diesem Fall ist es auch ermöglicht, dass die erfindungsgemäße Windkraftanlage bei Bedarf aus einem Durchgangsweg hinausgeklappt wird und etwa ansonsten raumgreifend installiert wird. Um die Konsole in einer um das Scharnier herum geschwenkten Position zu halten, kann zusätzlich die Konsole einen Anstellbügel aufweisen, welcher ein versehentliches bzw. ungewolltes Anklappen gegen die Wand verhindern soll.

Eine weitere Variante der Windkraftanlage sieht vor, dass die Konsole auf einem Aufstellrahmen aufgestellt ist, so dass diese freistehend auf einer Fläche aufgestellt werden kann. Als solche Fläche würde sich beispielsweise ein Flachdach eignen, über welches ein entsprechender Luftstrom ansonsten ungehindert hinwegziehen würde. Insoweit ist es sinnvoll, dem Aufstellrahmen eine Bodenplatte zuzuordnen, über welchen der Aufstellrahmen mit dem Untergrund verbunden werden kann. In einer Weiterbildung dieser aufstellbaren Variante der Windkraftanlage ist es möglich, den Aufstellrahmen gegenüber dem Gehäuse in verschiedene Richtungen zu verschwenken. Insbesondere erscheint es insoweit sinnvoll, wenn die hierfür verwendeten Schwenkachsen in Bezug auf die bevorzugte Windrichtung, also der Einlassrichtung, jeweils senkrecht stehen. Ergänzend können dem Aufstellrahmen Ablenkmittel zugeordnet sein, welche ihrerseits wiederum in axialer Richtung angeordnet sind. Auf Grund dieser Ablenkmittel, welche in Form etwa einer Ablenkplatte ausgestattet sind, ist es möglich, dass der Wind bei einem schrägen Auftreffen auf die Windkraftanlage diese auf Grund ihrer Schwenkbarkeit derart verdreht, dass die Windkraftanlage sich auf Grund des einströmenden Luftstroms quasi selbsttätig in den Wind hineindreht. Hierdurch ist ermöglicht, dass der in beliebigen Richtungen auf die Windkraftanlage wirkende Luftstrom effizient genutzt wird.

Letzthin ist auch ein Betrieb der Windkraftanlage in zwei Richtungen dadurch ermöglicht, dass die Antriebsscheibe beiderseits Lamellen aufweist. Ebenfalls ist in dieser Ausführungsform die trichterförmige Einfassung beiderseits angeordnet. Je nachdem, ob die Lamellen in die gleiche oder in entgegengesetzte Richtung ausgerichtet sind, ändert sich mit der Änderung der Beaufschlagungsseite die Drehrichtung der Antriebsscheibe oder bleibt gleich. Beispielsweise ist eine derartige Anordnung dann dienlich, wenn wechselnde Luftströme genutzt werden sollen, so beispielsweise wenn der Wind im Tagesverlauf vom Meer zum Land und nach der Richtungsumkehr vom Land zum Meer weht.

Die vorstehend beschriebene Erfindung wird im Folgenden anhand eines Ausführungsbeispiels näher erläutert.

Es zeigen
- Fig. 1: eine Antriebsscheibe in einer Drauf- sicht von oben in Einlassrichtung,
- Fig. 2: eine Antriebsscheibe mit einem Zwi- schenring und einer Rändelscheibe in einer Explosionsdarstellung,
- Fig. 3: eine alternative Antriebsscheibe, be- stehend aus einer Mehrzahl von Kreis- segmenten in einer Explosionsdarstel- lung,
- Fig. 4: ein Ausschnitt der Antriebsscheibe ge- mäß Fig. 1, wobei den Lamellen der An- triebsscheibe zusätzliche Abkantungen zugeordnet sind in einer perspektivi- schen Darstellung,
- Fig. 5: eine alternative Antriebsscheibe mit Lamellen auf beiden Seiten in einer perspektivischen Darstellung,
- Fig. 6: eine erfindungsgemäße Windkraftanlage mit einer zur Wandbefestigung vorgese- henen Konsole in einer perspektivischen Darstellung von schräg unten,
- Fig. 7: die Windkraftanlage gemäß Fig. 6 in ei- ner perspektivischen Darstellung von schräg hinten,
- Fig. 8: eine zusätzliche Ausgestaltungsform der Windkraftanlage mit einer trichterför- migen Einfassung und einer gegen die Wand verschwenkbaren Befestigungsvor- richtung in einer perspektivischen Dar- stellung von schräg oben,
- Fig. 9: eine Variante der Windkraftanlage gemäß Fig. 8 mit einer alternativen trichter- förmigen Einfassung in einem perspekti- vischen Teilschnitt,
- Fig. 10: die Windkraftanlage gemäß Fig. 6 in ei- ner perspektivischen Darstellung von schräg hinten,
- Fig. 11: eine weitere Ausgestaltungsform der Windkraftanlage auf einem um zwei Schwenkachsen herum schwenkbaren Auf- stellrahmen in einer perspektivischen Darstellung von schräg oben, sowie
- Fig. 12: eine zusätzliche Ausgestaltungsform der Windkraftanlage auf einem fest auf dem Boden stehenden Aufstellrahmen in einer perspektivischen Darstellung von schräg vorne.

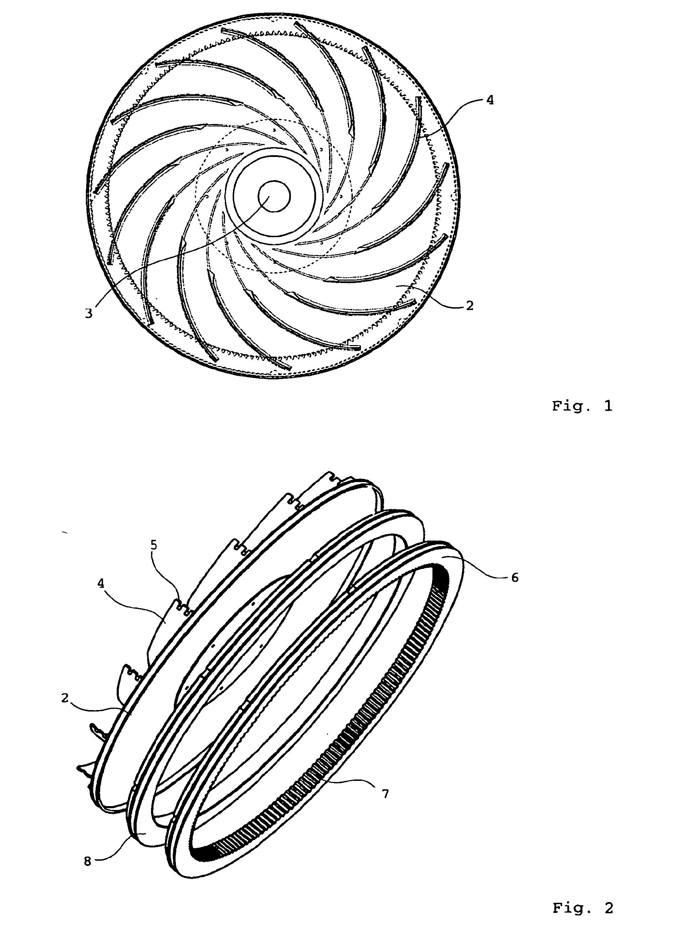

Fig. 1 zeigt eine Antriebsscheibe 2, welche eine Reihe von Lamellen 4 aufweist, wobei diese Lamellen 4 wirbelförmig um eine Drehachse 3 herum angeordnet sind. Die gezeigte Antriebsscheibe 2 ist Teil einer Windkraftanlage 1, welche den direkt auf die Windkraftanlage 1, mithin frontal auf die Antriebsscheibe 2, auftreffenden Luftstrom in eine Drehung der Antriebsscheibe 2 umsetzt. Insoweit trifft der ankommende Luftstrom senkrecht auf die Antriebsscheibe 2 auf und muss dabei radial ausweichen, so dass er in die von den Lamellen 4 gebildeten Gänge hineingedrückt wird. Dabei zeigen die Lamellen die Wirkung von Tragflügeln. Hierdurch wird die Antriebsscheibe 2 in eine Rotation um die Drehachse 3 herum versetzt, wobei die Rotation mithilfe einer auf der Rückseite der Antriebsscheibe 2 angeordneten Rändelung an einen Generator übertragen wird. Diese Anordnung hat den Vorteil, dass sie flach auf einer Wand montierbar ist, so dass ein vom Wind durchgriffenes Areal nicht erforderlich ist. Es reicht vielmehr aus, wenn der Wind gegen eine Front, beispielsweise eine Hausfront, strömt. Eine derartige Anordnung ist daher für den privaten Nutzer ohne Weiteres gegeben, so dass eine derartige Windkraftanlage an herkömmlichen Hauswänden aufgestellt werden kann.

Fig. 2 zeigt eine Explosionsdarstellung der in Fig. 1 dargestellten Antriebsscheibe 2. Diese besteht neben der Antriebsscheibe 2 selbst aus einer zusätzlichen Rändelscheibe 6, welche in ihrem Innenumfang eine Rändelung 7 zum Eingriff eines mit der Drehachse eines Generators 15 verbundenen Zahnrades geeignet ist. Auf diese Art und Weise kann die Drehung des vom Luftstrom angetriebenen Antriebsrades 2 mittelbar oder unmittelbar auf den Generator 15 übertragen werden. Die der Antriebsscheibe 2 zugeordneten Lamellen 4 weisen im Bereich ihrer Abrisskante Einkerbungen 5 auf, an denen sich der die Windkraftanlage 1 verlassende Luftstrom, welcher radial aus einem Gehäuse 10 der Windkraftanlage 1 austritt, brechen kann, so dass der im Bereich der entsprechenden Windkraftanlage 1 entstehende Geräuschpegel möglichst niedrig gehalten werden kann.

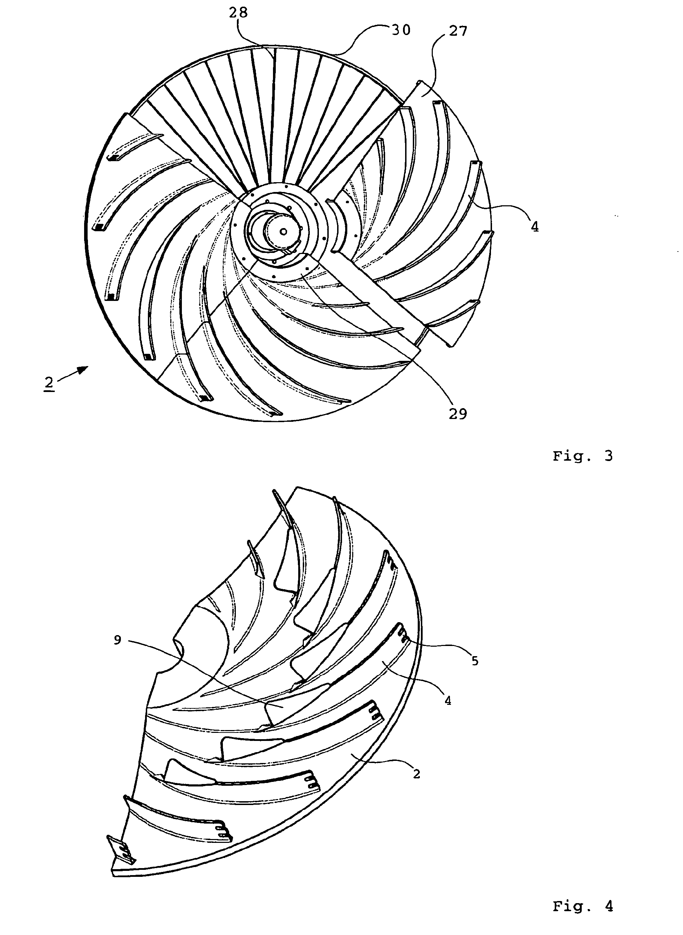

Fig. 3 zeigt eine Herstellungsvariante der Antriebsscheibe 2, welche ein Speichenrad 28 als Grundscheibe aufweist, auf welche Kreissegmente 27 aufgebracht sind. Die Kreissegmente 27 sind Viertelkreise mit einer Ausnehmung für eine Drehachse in der Mitte der Antriebsscheibe 2. In diesem Bereich sind die Kreissegmente 27 über geeignete Verbindungsmittel 29 mit dem Speichenrad 28 verbunden. Das Speichenrad 28 ermöglicht durch sein relativ geringes Gewicht eine stabile aber leichte Konstruktion. Der Umfang des Speichenrads 28 ist durch einen Massenring 30 begrenzt, welcher die für eine größere Laufruhe der Antriebsscheibe 2 erforderliche Gewicht mitbringt. Durch die Segmentierung der Antriebsscheibe 2 kann sowohl in der Herstellung als auch im Transport der Windkraftanlage 1 ein großer Vorteil erzielt werden.

Fig. 4 zeigt eine Variante der Antriebsscheibe 2 gemäß Fig. 1, bei der die Lamellen 4 eine zusätzliche Abkantung 9 aufweisen, mit deren Hilfe der in den Bereich der Antriebsscheibe 2 eintretende Luftstrom zusätzlich an die Antriebsscheibe 2 angepresst wird und dadurch die Effizienz der Windkraftanlage 1 erhöht. In einer Weiterbildung ist es zudem möglich, die Lamellen 4 ebenfalls schräg gegenüber der Antriebsscheibe 2 anzustellen, um diesen Effekt weiter zu befördern.

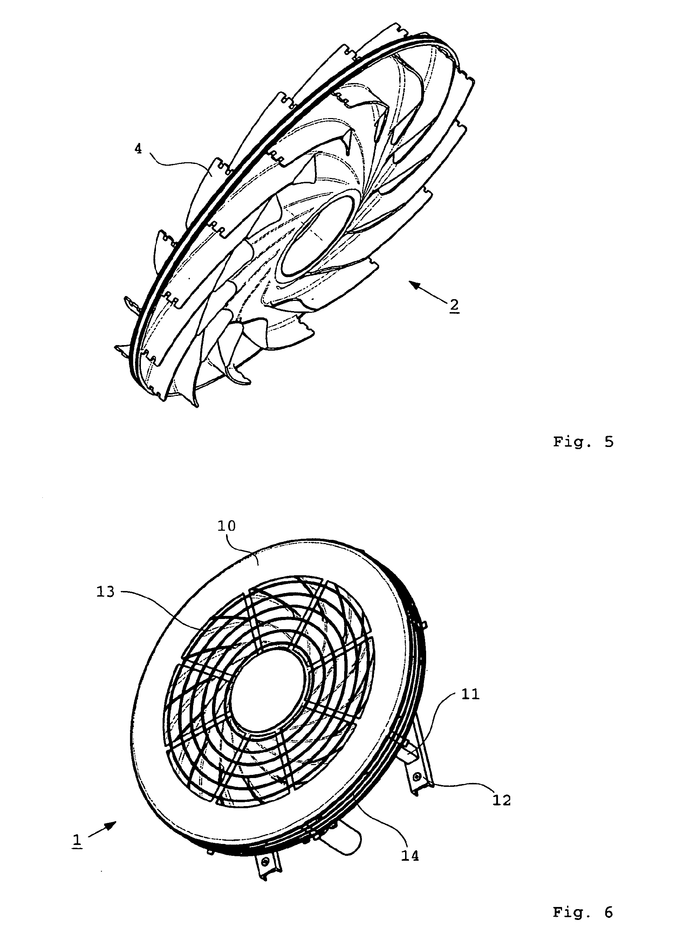

Fig. 5 zeigt eine alternative Antriebsscheibe 2, welche Lamellen 4 auf beiden Seiten aufweist. Eine derartige Antriebsscheibe 2 ist in einer Windkraftanlage 1 verwendbar, welche von beiden Seiten aus mit Luft beaufschlagt werden kann. In diesem Fall muss eine Neuausrichtung der Windkraftanlage 1 bei einem Drehen der Luftströmung, etwa wie an den Küsten von einer Tagrichtung in eine Nachtrichtung, nicht erfolgen. Durch die Wahl der Lamellenrichtung kann beeinflusst werden, ob die Antriebsscheibe 2 sich bei Beaufschlagung von unterschiedlichen Richtungen her auch in unterschiedliche Drehrichtungen dreht oder ob diese gleich sein sollen.

Fig. 6 zeigt nunmehr eine vollständige Windkraftanlage 1, wobei eine Antriebsscheibe 2 in einem Gehäuse 10 aufgenommen ist. Das Gehäuse 10 weist einen zentralen, axialen Einlass 13 auf, durch welchen der Luftstrom auf die Antriebsscheibe 2 trifft. Von der Antriebsscheibe 2 wird der Luftstrom radial abgeleitet und tritt an dem radialen Auslass 14 wieder aus dem Gehäuse 10 aus. Auf der Rückseite des Gehäuses 10 befindet sich eine Konsole 11, welche eine Wandmontage der gezeigten Windkraftanlage 1 ermöglicht. Hierdurch ist es möglich, die Windkraftanlage 1 direkt flach auf einer Wand zu montieren, so dass ein auf diese Wand treffender Luftstrom die Antriebsscheibe 2 und mithin einen mit der Antriebsscheibe verbundenen Generator 15 antreibt. Auf diese Weise ist es möglich, dass auch private Haushalte eine Nutzung der auf ihr Haus wirkenden Windenergie erhalten können, ohne dass hierfür größere bauliche Maßnahmen erforderlich wären.

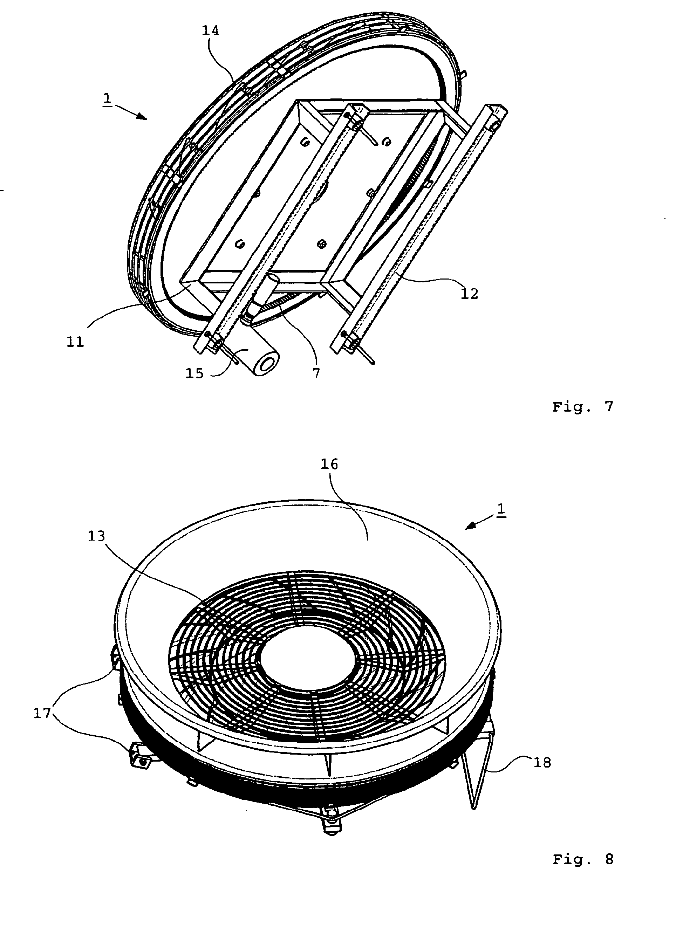

Fig. 7 zeigt die zuvor beschriebene Anordnung einer Windkraftanlage 1 auf einer Konsole 11 mit einer Wandhalterung 12, wobei auf dieser rückwärtigen Ansicht erkennbar ist, dass ein Generator 15 mit einem Zahnrad in einer an der Antriebsscheibe 2 angebrachten Rändelung 7 angreift. Dreht sich nunmehr auf Grund der einströmenden Luft die Antriebsscheibe 2, so dreht sich die mit der Antriebsscheibe 2 verbundene Rändelscheibe 6 mit und somit auch die Rändelung 7. Durch ein Drehen der Rändelung 7 werden die im Bereich der Rändelung 7 vorgesehenen Zähne in Bezug auf den Generator 15 seitwärts bewegt und treiben das auf der Antriebsachse des Generators 15 angeordnete Zahnrad an. Der hierdurch generierte elektrische Strom kann dann abgeleitet und etwa einer Batterie oder einem anderen elektrischen Speicher zugeführt werden.

Fig. 8 zeigt eine weitere Ausgestaltungsform der Windkraftanlage 1, welche in diesem Fall eine Wandhalterung aufweist, welche mithilfe von Scharnieren 17 erfolgt. Dadurch, dass die Windkraftanlage 1 lediglich an zwei Punkten mit einem Scharnier 17 befestigt ist, ermöglicht es, dass die Windkraftanlage 1 nicht nur flach an einer Wand positioniert wird, sondern auch von dieser Wand weggeschwenkt und in einen gegebenenfalls an der Wand vorbeiziehenden Luftstrom hineingeschwenkt werden kann. Um den Luftstrom noch besser auffangen zu können, weist die gezeigte Windkraftanlage 1 eine trichterförmige Einfassung 16 des axialen Einlasses 13 auf, welcher bewirkt, dass der an sich gerade auf den Einlass 13 einströmende Luftstrom bereits ein Stück weit in radialer Richtung in Bezug auf die Antriebsscheibe 2 abgelenkt wird, so dass eine verbesserte Effizienz hierdurch gewährleistet ist. Gegenüber dem Scharnier 17 ist ein Anstellbügel 18 vorgesehen, mit dessen Hilfe eine Anstellung gegenüber der Wand erfolgen kann. Dadurch kann die Windkraftanlage 1 in einer Position festgelegt werden, so dass durch den Winddruck eine Verstellung der Windkraftanlage 1 nicht erfolgt.

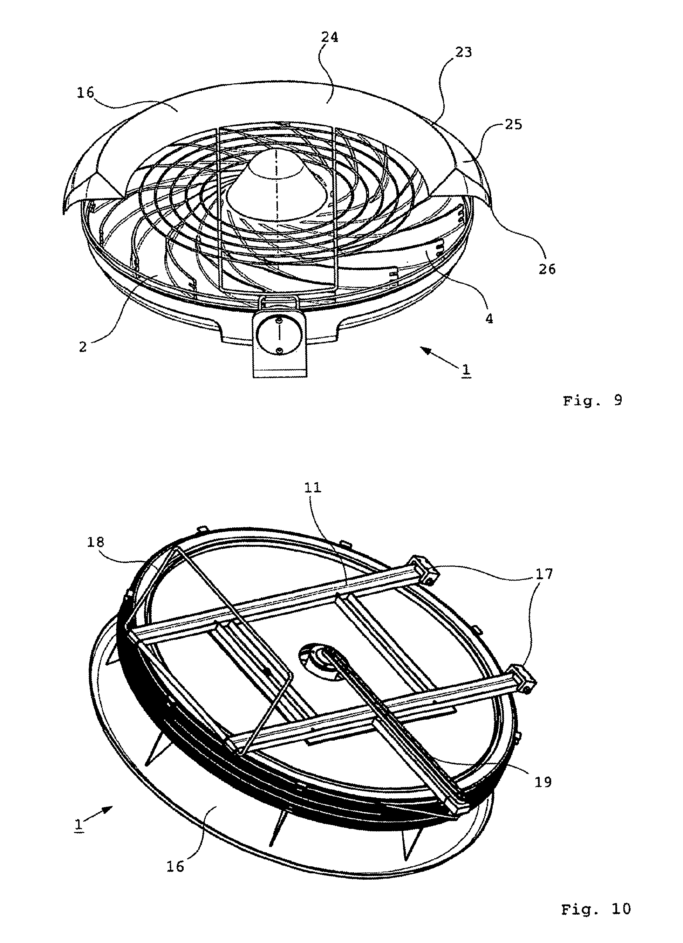

Fig. 9 zeigt eine alternative trichterförmige Einfassung 16, welche eine Trennkante 23 aufweist. Diese Trennkante 23 unterteilt die trichterförmige Einfassung 16 in eine Innenflanke 24 und eine Außenflanke 25. Die auf die Innenflanke 24 auftreffende Luft wird hierdurch auf die Antriebsscheibe 2 gelenkt, während die auf die Außenflanke 25 treffende Luft über eine Abrisskante 26 in den abluftseitigen Bereich radial abseits der Antriebsscheibe 2 abgelenkt wird. Hinter der Abrisskante 26 bildet sich hierbei ein Saugdruck, welcher die radial von der Antriebsscheibe 2 wegströmende Luft zusätzlich antreibt und somit die Effizienz der Anordnung verbessert. Ferner dient die trichterförmige Einfassung als Geräuschschutz für die im Bereich der Außenkanten der Lamellen 4 entstehenden Luftgeräusche.

Fig. 10 zeigt die bereits in Fig. 8 dargestellte Windkraftanlage 1 nochmals in einer Ansicht von schräg hinten, wobei hierbei zu sehen ist, dass durch die engere Bauweise der Konsole 11, an welcher die Scharniere 17 zur Wandmontage der Windkraftanlage 1 sowie der Anstellbügel 18 befestigt sind, ein Generator hinter dem Gehäuse 10 keinen Platz mehr findet. Daher ist in diesem Zusammenhang vorgesehen, den Generator 15 mittig in der Drehachse der Antriebsscheibe 2 unterzubringen und die Drehung der Antriebsscheibe 2 über einen um den Außenumfang der Antriebsscheibe 2 gelegten Riemen und eine Kraftübertragung 19 auf den Generator 15 zu übertragen.

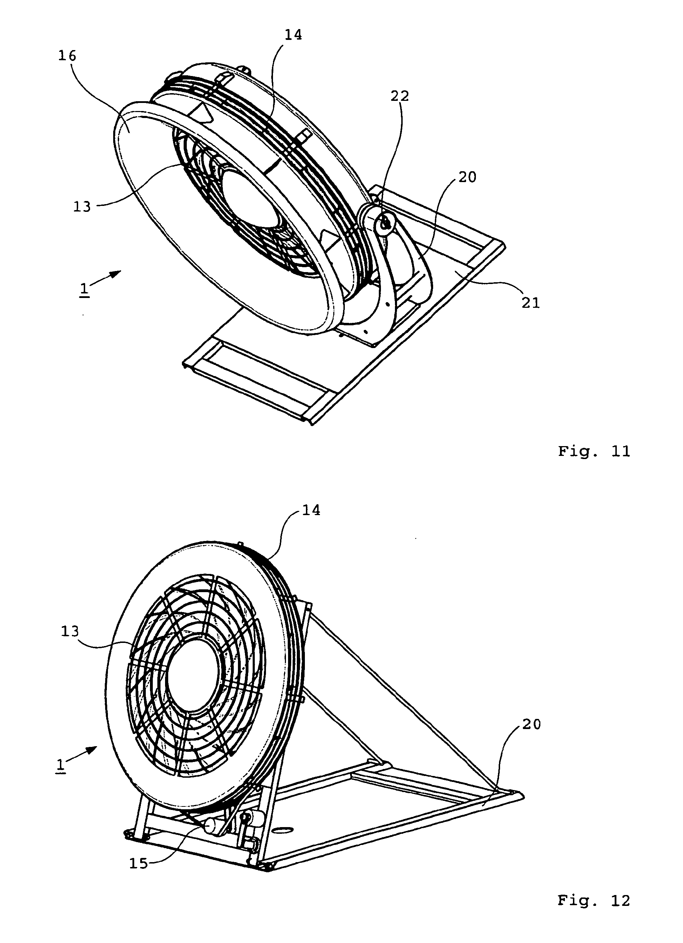

Eine weitere Ausgestaltungsform der Windkraftanlage 1 kann der Fig. 11 entnommen werden, in der das Gehäuse der Windkraftanlage 1 auf einem Aufstellrahmen 20 aufgeständert ist. Die Verbindung zwischen Gehäuse und Aufstellrahmen 20 erfolgt über eine Schwenkachse 22, so dass der Azimutalwinkel des Gehäuses einstellbar und somit die Ausrichtung der Windkraftanlage 1 auf einen jeweiligen Luftstrom ermöglicht ist. Ebenfalls ist die Anlage im Übergang zwischen dem Aufstellrahmen 20 und einer Bodenplatte 21 schwenkbar, so dass auch eine freie Auswahl der Ausrichtung der Windkraftanlage 1 ermöglicht ist. Mithilfe der Bodenplatte 21 kann eine solche Windkraftanlage 1 an beliebigen Stellen befestigt werden. Der Begriff "Bodenplatte" soll jedoch nicht darüber hinwegtäuschen, dass eine solche Platte ebenfalls auch an der Decke oder an einer Wand befestigt werden kann.

Fig. 12 zeigt eine weitere Ausgestaltungsform der erfindungsgemäßen Windkraftanlage 1, wobei hier der Aufstellrahmen eine freistehende Aufständerung ermöglicht. Eine solche Aufständerung ist beispielsweise im privaten Bereich auf einem Garagendach ermöglicht, wo die Windkraftanlage 1 mit dem Aufstellrahmen 20 einfach auf das Dach gestellt wird. Der über das Dach streichende Wind wird sodann durch den Einlass 13 in das Gehäuse 10 eintreten und nach einer Ablenkung in den Lamellen 4 der Antriebsscheibe 2 über den Auslass 14 abgeleitet werden. Eine solche Ausgestaltungsform ist mit besonderem Vorteil zusammenklappbar, so dass eine Lagerung und der Transport eines solchen Gerätes auch in einer raumsparenden Form möglich ist. Auf Grund dieser Ausgestaltung ist auch hier der Generator 15 unterhalb des Gehäuses 10 angebracht, wobei eine Kraftübertragung auf den Generator 15 durch ein um den Umfang der Antriebsscheibe 2 gelegtes Übertragungsmittel, etwa einen Zahnriemen, erfolgt.

Vorstehend ist somit eine Windkraftanlage beschrieben, welche es ermöglicht, auch im Bereich von privaten Anwesen eine Nutzung von Windenergie umzusetzen. Hierzu schlägt die vorliegende Erfindung eine einfache Windkraftanlage vor, welche im Prinzip lediglich an der Hauswand befestigt werden muss und den auf die Hauswand auftreffenden Wind in elektrische Energie umsetzt.

### BEZUGSZEICHENLISTE

- 1: Windkraftanlage
- 2: Antriebsscheibe
- 3: Drehachse
- 4: Lamelle
- 5: Einkerbungen
- 6: Rändelscheibe
- 7: Rändelung
- 8: Zwischenring
- 9: Abkantung
- 10: Gehäuse
- 11: Konsole
- 12: Wandhalterung
- 13: Einlass
- 14: Auslass
- 15: Generator
- 16: trichterförmige Einfassung
- 17: Scharnier
- 18: Anstellbügel
- 19: Kraftübertragung
- 20: Aufstellrahmen
- 21: Bodenplatte
- 22: Schwenkachse
- 23: Trennkante
- 24: Innenflanke
- 25: Außenflanke
- 26: Abrisskante
- 27: Kreissegment
- 28: Speichenrad
- 29: Verbindungsmittel
- 30: Massenring

## Patentansprüche

1. Windkraftanlage mit einer um eine Drehachse (3) rotierbaren Antriebsscheibe (2), welcher zuluftseitig um die Drehachse (3) herum wirbelförmig angeordnete Lamellen (4) derart zugeordnet sind, dass ein axial einströmender Luftstrom von den Lamellen (4) unter Vortrieb der Antriebsscheibe (2) radial abgeleitet wird,
**dadurch gekennzeichnet, dass** die Antriebsscheibe (2) in einem Gehäuse (10) mit einem axialen Einlass (13) und einem radialen Auslass (14) aufgenommen ist, welchem auf der dem Einlass (13) gegenüberliegenden Seite eine Konsole (11) zur Aufhängung des Gehäuses (10) zugeordnet ist.

2. Windkraftanlage gemäß Anspruch 1, bei welcher die Lamellen (4) senkrecht von der Antriebsscheibe (2) aufragen, oder mit der Antriebsscheibe (2) einen spitzen Winkel einschließen.

3. Windkraftanlage gemäß einem der Ansprüche 1 oder 2,
**dadurch gekennzeichnet, dass** die Lamellen (4) zumindest abschnittsweise nach außen hin ansteigend geformt sind und vorzugsweise im Bereich der Drehachse (3) der Antriebsscheibe (2) sich radial nach außen hin erstreckende, gegenüber den Lamellen (4) schräg angestellte Abkantungen (9) aufweisen.

4. Windkraftanlage gemäß einem der vorhergehenden Ansprüchen, **dadurch gekennzeichnet, dass** die Lamellen (4) im Randbereich der Antriebsscheibe (2) mit einer stumpfen Abrisskante enden, wobei jedoch die Abrisskante wenigstens eine Einkerbung (5) aufweist.

5. Windkraftanlage gemäß einem der vorhergehenden Ansprüche, bei welcher dem Einlass (13) eine trichterförmige Einfassung (16) zugeordnet ist, wobei die trichterförmige Einfassung (16) über eine Trennkante (23) in eine Innenflanke (24) und eine Außenflanke (25) unterteilt ist, die auf die Innenflanke (24) treffende Luft auf die Antriebsscheibe (2) und die auf die Außenflanke (25) treffende Luft an der Antriebsscheibe (2) vorbeigeleitet wird.

6. Windkraftanlage gemäß Anspruch 5, **dadurch gekennzeichnet, dass** die Außenflanke (25) eine Abrisskante (26) im Abluftbereich der Antriebsscheibe (2) derart bildet, dass die auf die Außenflanke (25) treffende Luft einen Saugdruck hinter der Abrisskante (26) bewirkt.

7. Windkraftanlage gemäß einem der vorhergehenden Ansprüche, **dadurch gekennzeichnet, dass** die Antriebsscheibe (2) eine Rändelung (7) oder ein Zahnsegment zur Kraftübertragung auf ein Kraftübertragungsmittel (19), vorzugsweise einen Antriebsriemen oder eine Antriebskette, aufweist, wobei vorzugsweise ein Generator (15) mit der Antriebsscheibe (2), insbesondere über die Rändelung (7) bzw. das Zahnsegment, direkt oder durch Umlenkung wirkverbunden ist.

8. Windkraftanlage gemäß einem der vorhergehenden Ansprüche, **dadurch gekennzeichnet, dass** der Antriebsscheibe (2), vorzugsweise auf der dem Einlass (13) gegenüberliegenden Seite, eine zusätzliche Massescheibe, vorzugsweise lösbar, zugeordnet ist, welche vorzugsweise über eine Fliehkraftkupplung mit der Antriebsscheibe (2) verbunden ist.

9. Windkraftanlage gemäß einem der vorhergehenden Ansprüche, **dadurch gekennzeichnet, dass** die Antriebsscheibe (2) aus einer Mehrzahl, vorzugsweise identischer, Kreissegmente (27) zusammengefügt ist, wobei die Kreissegmente (27) vorzugsweise auf eine Grundscheibe, etwa in Form eines Speichenrads (28), aufgelegt und mit dieser über Verbindungsmittel (29) verbunden sind.

10. Windkraftanlage gemäß einem der vorhergehenden Ansprüche, **dadurch gekennzeichnet, dass** der Antriebsscheibe (2) mithilfe von Auswuchtgewichten eine radial und/oder axial gleichmäßige Massenverteilung beigebracht ist.

11. Windkraftanlage gemäß einem der vorhergehenden Ansprüche, **dadurch gekennzeichnet, dass** die Konsole (11) Mittel (12) zur Wandbefestigung, vorzugsweise ein Scharnier (17) sowie einen zusätzlichen Anstellbügel (18) auf der dem Scharnier (17) gegenüberliegenden Seite der Konsole, aufweist.

12. Windkraftanlage gemäß einem der Ansprüche 1 bis 10,
**dadurch gekennzeichnet, dass** die Konsole (11) mit einem Aufstellrahmen (20) verbunden ist, wobei der Aufstellrahmen (20) vorzugsweise, etwa mittels einer Bodenplatte (21), mit dem Untergrund verbunden ist und der Aufstellrahmen (20) gegenüber der Bodenplatte (21) verschwenkbar ist.

13. Windkraftanlage gemäß Anspruch 12, **dadurch gekennzeichnet, dass** der Aufstellrahmen (20) um zwei senkrecht zueinander stehende Schwenkachsen verschwenkbar ist.

14. Windkraftanlage gemäß einem der Ansprüche 12 oder 13, **dadurch gekennzeichnet, dass** dem Gehäuse (10) auf der dem Einlass (13) abgewandten Seite Ablenkmittel derart in axialer Richtung zugeordnet sind, dass aufgrund des einströmenden Luftstroms eine selbsttätige Ausrichtung des Gehäuses (10) in den Wind ermöglicht ist.

15. Windkraftanlage gemäß einem der vorhergehenden Ansprüche, **dadurch gekennzeichnet, dass** die Antriebsscheibe (2) beidseitig mit Lamellen (4) versehen ist, welche entweder in gleiche oder in entgegengesetzte Richtungen ausgerichtet sind, und die Antriebsscheibe (2) somit eine Beaufschlagung mit Luft von beiden Seiten erlaubt.

## Claims

1. A wind power plant, comprising a drive disk (2) which is rotatable about a rotary axis (3) and which on the inlet air side is associated with blades (4) that are deployed in a vortex-shape around the rotary axis (3) in such a way that an axially inflowing air flow is radially discharged by the blades (4) under propulsion of the drive disk (2), **characterized in that** the drive disk (2) is accommodated in a housing (10) with an axial inlet (13) and a radial outlet (14), which housing is associated on the side opposite to the inlet (13) with a console for suspension of the housing (10).

2. A wind power plant according to claim 1, wherein the blades (4) protrude perpendicularly from the drive disk (2) or enclose an acute angle with the drive disk (2).

3. A wind power plant according to one of the claims 1 or 2, **characterized in that** the blades (4) are shaped at least in sections to rise to the outside and comprise folded edges (9) which are positioned obliquely in relation to the blades (4) and extend radially to the outside preferably in the region of the rotary axis (3) of the drive disk (2),

4. A wind power plant according to one of the preceding claims, **characterized in that** the blades (4) end in the edge region of the drive disk (2) with an obtuse trailing edge, with the trailing edge comprising at least one indentation (5) however.

5. A wind power plant according to one of the preceding claims, wherein the inlet (13) is associated with a funnel-like enclosure (16), with the funnel-like enclosure (16) being subdivided by a separation edge (23) into an inner flank (24) and an outer flank (25), with the air impinging on the inner flank (24) being guided onto the drive disk (2) and the air impinging on the outer flank (25) being guided past the drive disk (2).

6. A wind power plant according to claim 5, **characterized in that** the outer flank (25) forms a trailing edge (26) in the discharge air areas of the drive disk (2) in such a way that the air impinging on the outer flank produces a suction pressure behind the trailing edge (26).

7. A wind power plant according to one of the preceding claims, **characterized in that** the drive disk (2) comprises a knurling (7) or a toothed segment for power transmission onto a power transmission means (19), preferably a drive belt or a drive chain, with preferably a generator (15) being operatively connected either directly or by deflection with the drive disk (2), especially by way of the knurling (7) or the toothed segment.

8. A wind power plant according to one of the preceding claims, **characterized in that** the drive disk (2) is associated in a preferably detachable way with an additional mass disk, preferably on the side opposite of the inlet (13), which mass disk is preferably connected via a centrifugal clutch with the drive disk (2).

9. A wind power plant according to one of the preceding claims, **characterized in that** the drive disk (2) is assembled from a plurality of preferably identical segments (27) of a circle, with the segments (27) of a circle preferably being placed on a base disk in form of a spoke wheel (28) for example and being connected with said base disk via connection means (29).

10. A wind power plant according to one of the preceding claims, **characterized in that** the drive disk (2) is provided by means of balancing weights with a radially and/or axially even mass distribution.

11. A wind power plant according to one of the preceding claims, **characterized in that** the console (11) comprises means (12) for wall fixing, preferably a hinge (17) and an additional contact bracket (18) on the side of the console opposite of the hinge (17).

12. A wind power plant according to one of the claims 1 to 10, **characterized in that** the console (11) is connected with a mounting frame (20), with the mounting frame (20) preferably being connected with the base by means of a base plate (21) for example, and the mounting frame (20) is pivotable in relation to the base plate (21).

13. A wind power plant according to claim 12, **characterized in that** the mounting frame (20) can be pivoted about two pivoting axes disposed perpendicularly with respect to each other.

14. A wind power plant according to one of the claims 12 or 13, **characterized in that** the housing (10) is associated with deflection means in the axial direction on the side facing away from the inlet (13) in such a way that automatic alignment of the housing (10) into the wind is possible as a result of the inflowing air flow.

15. A wind power plant according to one of the preceding claims, **characterized in that** the drive disk (2) is provided on both sides with blades (4) which are aligned either in the same or in opposite directions and the drive disk (2) therefore allows impingement with air from both sides.

## Revendications

1. Éolienne avec un disque d'entraînement (2) tournant autour d'un axe de rotation (3), laquelle est équipée du côté de l'arrivée d'air de lamelles (4) disposées en tourbillon autour de l'axe de rotation (3) de telle sorte qu'un flux d'air affluent axialement est dévié radialement par les lamelles (4) sous la propulsion du disque d'entraînement (2),
**caractérisée en ce que** le disque d'entraînement (2) est disposé dans un boîtier (10) avec une arrivée axiale (13) et une sortie radiale (14), lequel étant doté d'une console (11) sur le côté opposé à l'arrivée (13) servant à accrocher le boîtier (10).

2. Éolienne conformément à la revendication 1, **caractérisée en ce que** les lamelles (4) dépassent verticalement du disque d'entraînement (2) ou forment un angle aigu avec le disque d'entraînement (2).

3. Éolienne conformément à la revendication 1 ou 2, **caractérisée en ce que** les lamelles (4) sont du moins partiellement ascendantes vers l'extérieur et qu'elles présentent de préférence des délardements (9) de biais par rapport aux lamelles (4) s'étirant vers l'extérieur dans le sens radial au niveau de l'axe de rotation (3) du disque d'entraînement (2).

4. Éolienne conformément à l'une des revendications précédentes, **caractérisée en ce qu'**au niveau du bord du disque d'entraînement (2), les lamelles (4) se terminent par une arête émoussée, sachant toutefois que l'arête présente au moins une encoche (5)

5. Éolienne conformément à l'une des revendications précédentes, **caractérisée en ce qu'**une bordure (16) en forme d'entonnoir est affectée à l'arrivée (13), sachant que la bordure (16) en entonnoir est divisée en un flanc intérieur (24) et un flanc extérieur (25) par le biais d'une arête de séparation (23), l'air arrivant sur le flanc intérieur (24) est déviée sur le disque d'entraînement (2) et l'air arrivant sur le flanc extérieur (25) est dévié de sorte à passer devant le disque d'entraînement (2).

6. Éolienne conformément à la revendication 5, **caractérisée en ce que** le flanc extérieur (25) forme une arête (26) au niveau de la sortie d'air du disque d'entraînement (2) de sorte que l'air arrivant sur le flanc extérieur (25) génère une pression d'aspiration derrière l'arête (26).

7. Éolienne conformément à l'une des revendications précédentes, **caractérisée en ce que** le disque d'entraînement (2) présente un moletage (7) ou un segment à crans transmettant la force sur un dispositif de transmission de la force (19), de préférence une courroie ou une chaîne d'entraînement, sachant que de préférence, un générateur (15) est relié au disque d'entraînement (2), en particulier via un moletage (7) ou le segment cranté, directement ou par un coude.

8. Éolienne conformément à l'une des revendications précédentes, **caractérisée en ce qu'**un disque de masse supplémentaire de préférence amovible et de préférence relié au disque d'entraînement (2) par un embrayage centrifuge est affecté au disque d'entraînement (2), de préférence sur le côté opposé à l'arrivée (13).

9. Éolienne conformément à l'une des revendications précédentes, **caractérisée en ce que** le disque d'entraînement (2) est composé de plusieurs segments circulaires (27) de préférence identiques, sachant que les segments circulaires (27) sont disposés de préférence sur un disque de base, par exemple sous forme de roue à rayons (28) et qu'ils sont reliés à celui-ci par des systèmes de raccord (29).

10. Éolienne conformément à l'une des revendications précédentes, **caractérisée en ce qu'**une répartition des masses radiale et/ou axiale homogène est apportée au disque d'entraînement (2) à l'aide de masses d'équilibrage.

11. Éolienne conformément à l'une des revendications précédentes, **caractérisée en ce que** la console (11) présente des systèmes (12) de fixation murale, de préférence une charnière (17) et un étrier (18) supplémentaire sur le côté de la console opposé à la charnière (17).

12. Éolienne conformément à l'une des revendications 1 à 10, **caractérisée en ce que** la console (11) est reliée à un cadre (20), sachant que le cadre (20) est de préférence relié à la base à l'aide par exemple d'une plaque (21) et que par rapport à la plaque (21), le cadre (20) peut pivoter.

13. Éolienne conformément à la revendication 12, **caractérisée en ce que** le cadre (20) pivote sur deux axes pivotants disposés à la verticale l'un par rapport à l'autre.

14. Éolienne conformément à l'une des revendications 12 ou 13, **caractérisée en ce que** des moyens de déviation disposés dans le sens axial sont montés sur le côté opposé à l'arrivée (13) du boîtier (10) de telle sorte qu'en raison de l'air entrant, le boîtier (10) puisse s'orienter automatiquement dans le vent.

15. Éolienne conformément à l'une des revendications précédentes, **caractérisée en ce que** le disque d'entraînement (2) est pourvu des deux côtés de lamelles (4) dirigées soit dans la même direction soit dans des directions opposées, permettant ainsi un actionnement du disque d'entraînement (2) avec l'air arrivant des deux côtés.
